(19) **Europäisches Patentamt / European Patent Office / Office européen des brevets**

(11) **EP 2 752 230 B1**

(12) **EUROPEAN PATENT SPECIFICATION**

(45) Date of publication and mention
of the grant of the patent:
**21.12.2016 Bulletin 2016/51**

(21) Application number: **12826828.1**

(22) Date of filing: **30.08.2012**

(51) Int Cl.:
**B01D 39/16** (2006.01)    **B01D 46/52** (2006.01)
**B01D 46/54** (2006.01)    **B01D 63/14** (2006.01)
**B01D 69/10** (2006.01)    **B01D 71/36** (2006.01)
**B32B 5/24** (2006.01)    **B32B 27/30** (2006.01)
**D06M 17/00** (2006.01)

(86) International application number:
**PCT/JP2012/005501**

(87) International publication number:
**WO 2013/031229 (07.03.2013 Gazette 2013/10)**

(54) **FILTER MEDIUM FOR AIR FILTER, AIR FILTER UNIT, AND METHOD FOR PRODUCING FILTER MEDIUM FOR AIR FILTER**

FILTERMEDIUMFÜR LUFTFILTER, LUFTFILTEREINHEIT UND VERFAHREN ZUR HERSTELLUNG EINES FILTERMEDIUMS FÜR EINEN LUFTFILTER

MATÉRIAU DE FILTRATION POUR FILTRE À AIR, UNITÉ DE FILTRE À AIR ET PROCÉDÉ DE PRODUCTION D'UN MATÉRIAU DE FILTRATION POUR UN FILTRE À AIR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2011 JP 2011190196**

(43) Date of publication of application:
**09.07.2014 Bulletin 2014/28**

(73) Proprietor: **Daikin Industries, Ltd.**
**Osaka 530-8323 (JP)**

(72) Inventors:
• **HARA, Satoshi**
**Osaka-shi**
**Osaka 530-8323 (JP)**
• **BAO, Li**
**Osaka-shi**
**Osaka 530-8323 (JP)**
• **INUI, Kunihiko**
**Osaka-shi**
**Osaka 530-8323 (JP)**

• **YAMAMOTO, Seigo**
**Osaka-shi**
**Osaka 530-8323 (JP)**
• **SHIBUYA, Yoshiyuki**
**Osaka-shi**
**Osaka 530-8323 (JP)**
• **KOBAYASHI, Makoto**
**Osaka-shi**
**Osaka 530-8323 (JP)**
• **NIINUMA, Hitoshi**
**Osaka-shi**
**Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 750 493       EP-A2- 1 266 681**
**JP-A- 2004 097 998    JP-A- 2005 279 554**
**JP-A- 2006 150 275    JP-A- 2009 501 438**

**Description**

TECHNICAL FIELD

The present invention relates to a filter medium for an air filter to collect dust in an air flow, an air filter unit, and a method for producing the filter medium for an air filter.

BACKGROUND ART

Manufacturing a semiconductor device or a liquid crystal display device is performed in a highly clean space. To make a highly clean space, a porous membrane (hereinbelow, referred to as PTFE porous membrane) consisting of polytetrafluoroethylene (hereinbelow, referred to as PTFE) is used as a dust collecting filter, for example. Compared to a filter medium made of glass fiber, the PTFE porous membrane has higher dust collection efficiency when comparison is made at the same pressure loss, and thus it is preferably used for a HEPA filter (High Efficiency Particulate Air Filter) or a ULPA filter (Ultra Low Penetration Air Filter), in particular.

Meanwhile, the PTFE porous membrane has a denser fiber structure compared to a glass fiber filter medium which has been conventionally used. As such, clogging by dust is quickly caused, and when used in an environment having large dust collection load such as outside air treatment unit, pressure loss of an air filter unit is increased within a short period of time.

In relation to the problems described above, a filter medium for an air filter capable of suppressing an increase in pressure loss by preventing clogging caused by collected dust is known (Patent Document 1). The filter medium for an air filter includes a PTFE porous membrane and a fibrous air-permeable porous medium, and the fibrous air-permeable porous medium is positioned on the upstream side of gas flow of the porous membrane, in which the fibrous air-permeable porous medium has a fiber diameter ranging from 1 to 15 $\mu$m, a porosity of 70% or more, and a weight per unit area of 60 g/m$^2$ or more.

An air-suctioning filter medium for turbine with suppressed increase in pressure loss is also known as a filter medium for a filter (Patent Document 2). The filter medium includes a polytetrafluoroethylene porous membrane and an air-permeable support medium and the fiber diameter of the air-permeable support medium is in the range of from 0.2 $\mu$m to 15 $\mu$m.

In addition, EP 1 750 493 A1 discloses a fan cooling unit for cooling electronic components, such as for an air-cooled telecommunications base station, comprises a protective covering for at least the air inlet opening of a casing in which the electronic components are housed, wherein the protective covering has a frame into which a composite filter media is mounted so as to create an air-tight fit, the composite filter media comprises a membrane filtration layer with a porous polymeric membrane, such as expanded polytetrafluoroethylene (ePTFE), and at least one depth filtration layer disposed on an upstream side of the membrane filtration layer, the depth filtration media layer comprises fibers having an electrostatic charge, and the ePTFE membrane is preferably made from a blend of a PTFE homopolymer and a modified PTFE polymer.

CITATION LISTS

PATENT DOCUMENTS

Patent Document 1: JP 2000-300921 A
Patent Document 2: JP 2002-370009 A

SUMMARY OF INVENTION

TECHNICAL PROBLEM

The aforementioned known filter media can have a suppressed increase in pressure loss as a characteristic of filter medium. However, when used for an air filter unit, the pressure loss in an air filter unit may not be suppressed, although it is necessarily required. Specifically, as the filter medium used for an air filter unit is subjected to a pleats processing to have a zigzag shape with an outside fold and an inside fold, the pressure loss originating from the structure of an air filter unit (that is, structure resistance) is also applied in addition to the pressure loss of the filter medium itself, and thus it is difficult to lower the pressure loss in the air filter unit.

Further, among the aforementioned known filter media, the filter medium having an air-permeable support medium with a fiber diameter of from 0.2 $\mu$m to 15 $\mu$m has a broad fiber diameter range, and within a range with a small fiber diameter, fibers in the air-permeable support medium have a dense structure so that the pressure loss in the air-permeable support medium may increase. Further, regarding the fibrous air-permeable porous medium with a fiber diameter of from 1 $\mu$m to 15 $\mu$m among the aforementioned known filter media, it may be necessary to increase the a thickness and weight per unit area of a fibrous air-permeable porous medium to obtain dust collection efficiency in the range having a large fiber diameter. Thus, when an air filter unit is produced by using such filter medium, the pressure loss cannot be lowered.

Accordingly, an object of the present invention is to provide a filter medium for an air filter, which can suppress pressure loss in an air filter unit and pressure loss originating from the structure of an air filter unit, an air filter unit using the filter medium, and also a method for producing the filter medium.

SOLUTION TO PROBLEM

A filter medium according to the present invention is defined by the combination of features of claim 1. Dependent claims relate to preferred embodiments.

An air filter unit according to the present invention is defined by the combination of features of claim 8.

A method for producing a filter medium according to the present invention is defined by the combination of features of claim 9.

ADVANTAGEOUS EFFECTS OF INVENTION

With the filter medium for an air filter, the air filter unit using the filter medium, and the method for producing the filter medium, pressure loss originating from the structure of the air filter unit can be suppressed so that an air filter unit having suppressed pressure loss in an air filter unit can be provided. Further, even when a PTFE porous membrane is used for a principal collection layer, the air filter unit has almost the same life span as conventionally used glass fiber filter medium.

BRIEF DESCRIPTION OF DRAWINGS

Fig. 1A and Fig. 1B are drawings illustrating the constitution of an air filter unit of the present embodiment, in which the filter medium for an air filter of the present embodiment is used.

Fig. 2 is a cross-sectional view illustrating the layer constitution of the filter medium used for an air filter of the present embodiment.

Fig. 3A is a drawing illustrating the contact between the filter medium of the present embodiment and the shape maintaining member and Fig. 3B is a drawing illustrating the contact between the filter medium of a related art and the shape maintaining member.

Fig. 4 is a cross-sectional view illustrating the layer constitution of the filter medium of Modification Example 1 of the present embodiment.

Fig. 5A is a drawing illustrating the arrangement of a spacer to be installed in the filter medium of a filter pack of Modification Example 2 of the present embodiment and Fig. 5B is a cross-sectional view of the filter medium and spacer of Fig. 5A

Fig. 6 is a perspective view illustrating the filter medium of Modification Example 3 of the present embodiment.

Fig. 7 is a developed view illustrating the filter medium of Modification Example 3 of the present embodiment.

DESCRIPTION OF EMBODIMENTS

Hereinbelow, the filter medium for an air filter of the present invention, the air filter unit using the filter medium, and also the method for producing the filter medium are described in detail.

[Air filter unit]

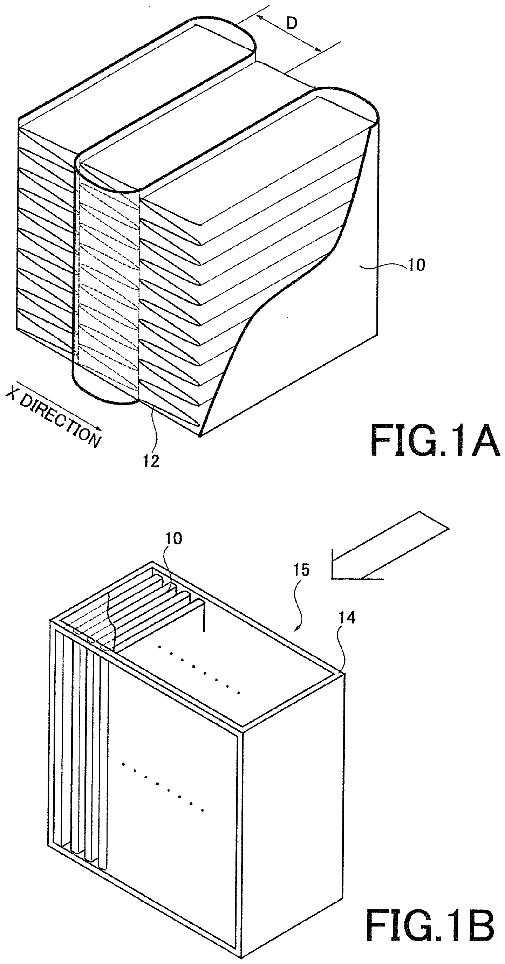

Figs. 1A and 1B are drawings illustrating the brief constitution of an air filter unit of the present embodiment, in which the filter medium for an air filter of the present embodiment is used. In Fig. 1A, a perspective view of the filter pack used for an air filter unit is illustrated.

The air filter pack has the filter medium for an air filter (hereinbelow, simply referred to as a filter medium) 10 and the shape maintaining member 12. The filter medium 10 is prepared as a processed filter medium having a zigzag shape resulting from an outside fold and an inside fold to have a mountain part and a valley part according to a pleats processing of a sheet-like filter medium. The shape maintaining member 12 is a separator to be inserted into each valley part of the processed filter medium for maintaining the zigzag shape of the processed filter medium. The shape maintaining member 12 illustrated in Fig. 1A has a wave-like shape as a result of corrugation processing of a thin plate, and it is positioned in the valley part of the processed filter medium. Accordingly, the filter medium 10 can maintain the zigzag shape. Regarding the processed filter medium with a zigzag shape, the distance D between adjacent top parts of the outside fold or adjacent bottom parts of the inside fold is 5 to 10 mm, for example, and a pleats number (number of outside fold or inside fold) per 100 mm width of the processed air filter pack (that is, length in direction x of Fig. 1A) is 10 to 20.

In Fig. 1B, a perspective view of the air filter unit 15 is illustrated. In the figure, the roof surface of the air filter unit 15 is omitted so that a part of the filter medium 10 as a processed filter medium present inside is illustrated. The air filter unit 15 is constituted by holding the processed filter medium having the shape maintaining member 12, that is not illustrated in Fig. 1B, arranged therein with the frame body 14 produced by combining plates.

[Filter medium]

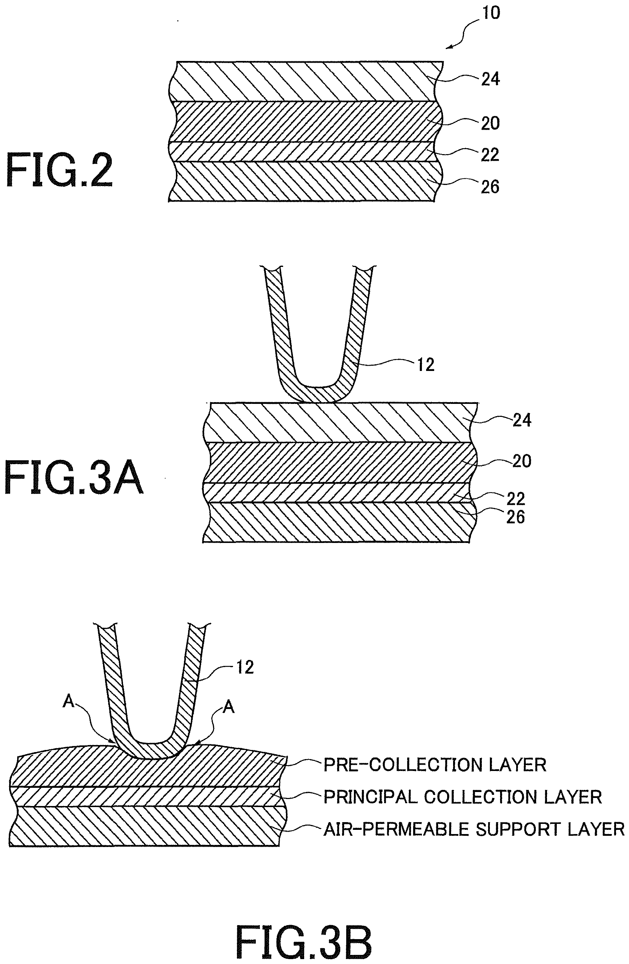

Fig. 2 is a cross-sectional view illustrating the layer constitution of the filter medium 10 used for the air filter unit 15. The filter medium 10 is a filter medium for an air filter for collecting dust in air flow, and the filter medium 10 includes the pre-collection layer 20, the principal collection layer 22, the air-permeable cover layer 24, and the air-permeable support layer 26. Meanwhile, the filter medium 10 is arranged in a manner such that the air flow flows from top to bottom in Fig. 2. Specifically, in the filter medium 10, the air-permeable cover layer 24 is positioned in the outermost surface layer of the filter medium 10 on the upstream side of the air flow. Accordingly, from the upstream side of the air flow, the air-permeable cover layer 24, the pre-collection layer 20, the principal collection layer 22, and the air-permeable support layer 26 are laminated in the order.

The pre-collection layer 20 is formed on the upstream side of the air flow of the principal collection layer 22 and collects a part of dust in the air flow before dust collection by the principal collection layer 22.

A material or structure of the pre-collection layer 20 is not particularly limited. However, a non-woven fabric produced by melt-blown method or a non-woven fabric produced by electrospinning method is used. Examples of the material of the fibrous material include, in addition to polyethylene (PE), polypropylene (PP), polyethylene terephthalate (PET), polybutylene terephthalate (PBT), polyamide (PA), polyacrylonitrile (PAN), polyvinylidene fluoride (PVdF), polyvinyl alcohol (PVA), and polyurethane (PU). An average fiber diameter of the fibrous material is, for example, 0.1 to 5 $\mu$m, or preferably 0.5 to 2 $\mu$m, and the weight per unit area is 5 to 50 g/m$^2$, for example. When the fiber diameter is excessively small, distance between fibers becomes narrow so that the clogging of the pre-collection layer 20 itself cannot be ignored. On the other hand, when it is large, the collection efficiency per unit fiber is reduced, and thus the weight per unit area and thickness become large to have the collection efficiency required for the pre-collection layer 20 described below, resulting in higher structure resistance, and therefore it is undesirable. The geometric standard deviation representing diffusion of the fiber diameter distribution is 2.5 or less, for example, or preferably 2.0 or less. That is because, when the geometric standard deviation is excessively high, ratio of the fibers having low collection efficiency per unit fiber is increased and the weight per unit area and thickness need to be increased to obtain the collection efficiency required for the pre-collection layer described below.

The pressure loss of the pre-collection layer 20 is preferably 80 Pa or less so that the pressure loss of the entire filter medium 10 is 1/2 or so of the filter medium for HEPA of a related art which uses glass fiber. Further, the dust collection efficiency of the pre-collection layer 20 is preferably 50% or more in a static eliminated state and the upper limit of the collection efficiency of the pre-collection layer 20 is preferably 99%. When the collection efficiency of the pre-collection layer 20 is excessively low, the collection load onto the principal collection layer 22 is increased so that clogging by dust is caused. On the other hand, when the collection efficiency of the pre-collection layer 20 is excessively high, the clogging of the pre-collection layer 20 itself cannot be ignored.

Further, a thickness of the pre-collection layer 20 is preferably less than 0.4 mm, for example. When the thickness of the pre-collection layer 20 is equal to or more than 0.4 mm, pressure loss originating from the structure of the air filter unit 15 is increased. The materials, fiber diameter, and weight per unit area of the pre-collection layer 20 are selected so as to have those characteristics.

The principal collection layer 22 is positioned on a downstream side of the air flow relative to the pre-collection layer 20 and collects the dust passed through the pre-collection layer 20. The principal collection layer 22 consists of a PTFE porous membrane.

The PTFE porous membrane is produced by mixing PTFE fine powder with a liquid phase lubricating agent at a pre-determined ratio or higher. For example, by mixing 5 to 50% by mass of a liquid phase lubricating agent at 20°C per kilogram of PTFE fine powder, a mixture is obtained. Further, by extruding the obtained mixture and removing subsequently the liquid phase lubrication agent, a non-sintered tape is obtained. Further, by stretching thus-obtained non-sintered tape, a porous membrane is obtained. At that time, after stretching the non-sintered tape by 3 folds to 20 folds in the length direction followed by stretching by 10 folds to 50 folds in the width direction which is perpendicular to the length direction, the non-sintered tape is stretched by 80 folds to 800 folds in terms of the total area magnification. After that, the PTFE porous membrane is obtained by performing thermal fixing. The production method described above is an example and the method for producing a PTFE porous membrane is not limited.

The filling ratio of the PTFE porous membrane is 8% or less, for example, or preferably 3% to 8%. An average fiber diameter of the fiber constituting the PTFE porous membrane is 0.1 μm or less, for example, and a film thickness of the PTFE porous membrane is 50 μm or less, for example.

The air-permeable cover layer 24 is positioned in the outermost surface layer of the filter medium 10 on the upstream side of the air flow, and it suppresses deformation of the surface of the filter medium 10 against pressing force from the outside while allowing dust in the air flow to pass therethrough. The pressure loss in the air-permeable cover layer 24 is, from the viewpoint of suppressing pressure loss in the filter medium 10, preferably 10 Pa or less under the conditions of an air flow rate of 5.3 cm/second, and the pressure loss is preferably 5 Pa or less, or more preferably it is substantially 0 or approximately 0. The efficiency for collecting dust with a particle diameter of 0.3 μm by the air-permeable cover layer 24 is 5% or less, and is substantially 0 or approximately 0. In other words, the air-permeable cover layer 24 does not have a function of a filter for collecting dust, but allows dust to pass therethrough. A thickness of the air-permeable cover layer 24 is preferably 0.3 mm or less from the viewpoint of suppressing deformation of the surface of the filter medium 10 without further increasing the thickness of the filter medium 10.

As for the air-permeable cover layer 24, a spun-bond non-woven fabric is preferably used, for example. As a fiber material of the spun-bond non-woven fabric, PP, PE, PET, or the like are used and the fiber material is not particularly limited. An average fiber diameter of the fiber material is 10 to 30 μm, for example. A weight per unit area is 5 to 20 g/m$^2$, for example.

Fig. 3A is a drawing illustrating the contact between the filter medium 10 and the shape maintaining member 12. Fig. 3B is a drawing illustrating the contact for a case, in which the air-permeable cover layer is not present in the filter medium.

When the shape maintaining member 12 is in contact with the filter medium 10 as illustrated in Fig. 1A, the air-permeable cover layer 24 is brought into contact with the shape maintaining member 12 as illustrated in Fig. 3A. At that time, a part of the surface of the filter medium 10 which is in contact with the shape maintaining member 12 is locally deformed to yield a recess and the peripheral region of the contact part is raised as a rebound. Such rebound is suppressed by the air-permeable cover layer 24. Meanwhile, according to a filter medium of a related art, in which the air-permeable cover layer 24 like the present embodiment, is absent and the pre-collection layer is positioned on the outermost surface layer, as illustrated in Fig. 3B, the peripheral region A in contact part is raised according to deformation of the surface of the filter medium (that is, surface of the pre-collection layer). At that time, the air flow flowing in the air filter unit 15 flows through a narrow space surrounded by the shape maintaining member 12 and the filter medium 10 in a direction perpendicular to the paper surface of Fig. 3A. As such, as illustrated in Fig. 1A, the cross-sectional area of the flow path of the air flow surrounded by the shape maintaining member 12 and the filter medium 10 (that is, cross-sectional area of the flow path through which air flows) becomes slightly reduced as illustrated in Fig. 1A. As a result, a flow rate of the air flow is increased. In addition, as the cross-sectional area of the flow path of the air flow surrounded by the shape maintaining member 12 and the filter medium 10 is slightly reduced, size (that is, equivalent diameter) of the flow path through which air flows also becomes reduced. For such reasons, resistance applied from the flow path of air flow increases in accordance with known resistance of a pipe (that is, it is proportional to square of a flow rate of fluid and inversely proportional to size (that is, equivalent diameter) of a pipe). The increase in resistance leads to an increase in pressure loss originating from the structure of the air filter unit 15. In other words, by the air-permeable cover layer 24 of the present embodiment, deformation of the surface of the filter medium 10 is suppressed against the pressing force from an outside, and thus pressure loss originating from the structure of the air filter unit 15 (that is, structure resistance) is suppressed.

The air-permeable support layer 26 is positioned on a downstream side of the air flow relative to the principal collection layer 22 to support the principal collection layer 24. The pressure loss in the air-permeable support layer 26 is, from the viewpoint of suppressing pressure loss in the filter medium 10, preferably 10 Pa or less under the conditions of an air flow rate of 5.3 cm/second, and it is preferable that the pressure loss is substantially 0 or approximately 0.

A material and structure of the air-permeable support layer 26 are not particularly limited, but felt, non-woven fabric, woven-fabric, mesh (net-like sheet), and other materials can be used. However, from the viewpoint of intensity, collection property, flexibility, and workability, a non-woven fabric having thermal-fusion property is preferable. Further, the non-woven fabric can be a composite fiber in which part or all of the constituting fiber has a core/sheath structure, and in such case, it is desirable that the core component has higher melting point than the sheath component. The material is also not particularly limited, and polyolefin (PE, PP, or the like), polyamide, polyester (PET or the like), aromatic polyamide, or a composite material thereof or the like can be used. Examples of the composite fiber with a core and sheath structure include a combination in which core/sheath is PET/PE, or high melting-point polyester/low melting-point polyester.

Further, regarding the laminate of the principal collection layer 22 and the air-permeable support layer 26, those having a bending rigidity of 30 g weight/mm or more are preferable from the viewpoint of suppressing the deformation of air flow in the principal collection layer 22 by the air-permeable support layer 26. As having high pressure loss and low rigidity due to extremely thin thickness, the principal collection layer 22 is prone to have deformation by air flow. When the air-permeable support layer 26 is absent, stress and strain for causing the deformation by the principal collection layer 22 acts on between principal collection layer 22 and the pre-collection layer 20, and an interlayer rupture of the pre-collection layer 20 may be eventually caused. For such reasons, the laminate of the principal collection layer 22 and the air-permeable support layer 26 preferably has a bending rigidity of 30 g weight/mm or more. Although the upper limit of the bending rigidity of the laminate of the principal collection layer 22 and the air-permeable support layer 26 is not particularly limited, it is preferable that the upper limit be substantially 2000 g weight/mm or less.

In the aforementioned filter medium 10, when the flow rate of the air flow is 5.3 cm/second, the pressure loss in the principal collection layer 22 is the highest among the air-permeable cover layer 24, the pre-collection layer 20, and the principal collection layer 22. The pressure loss in the pre-collection layer 20 is the second and the pressure loss in the air-permeable cover layer 24 is the smallest. From the viewpoint of having pressure loss in the filter medium 10 of 190 Pa or less, it is preferable that the pressure loss in the air-permeable cover layer 24 is 10 Pa or less, the pressure loss in the pre-collection layer 20 is 80 Pa or less, and the pressure loss in the principal collection layer 22 is 100 Pa or less. Within the range, the air filter unit 15 can be preferably used for a HEPA filter or a ULPA filter.

Further, regarding the collection efficiency for dust with a particle diameter of 0.3 $\mu$m, the collection efficiency of the principal collection layer 22 is the highest among the air-permeable cover layer 24, the pre-collection layer 20, and the principal collection layer 22, followed by the pre-collection layer 20. The collection efficiency of the air-permeable cover layer 24 is 0 or approximately 0. The efficiency for collecting dust with a particle diameter of 0.3 $\mu$m by the pre-collection layer 20 is 50% or more for the pre-collection layer 20 in a static eliminated state, and it is preferable that the efficiency for collecting dust with a particle diameter of 0.3 $\mu$m by the principal collection layer 22 is 99.9% or more from the viewpoint of having the collection efficiency for dust with a particle diameter of 0.3 $\mu$m of 99.95% or more for the filter medium 10. Within the range, the air filter unit 15 can be preferably used for a HEPA filter.

Meanwhile, the air-permeable cover layer 24 and the pre-collection layer 20 can be bonded by ultrasonic thermal fusion, adhesion using reactive adhesives, thermal laminating using a hot-melt resin, or the like.

The principal collection layer 22 and the air-permeable support layer 26 can be bonded, for example, by utilizing an anchor effect according to partial melting of the air-permeable support layer 26 caused by heating or melting of a hot-melt resin, or by utilizing adhesion using reactive adhesives.

Further, the pre-collection layer 20 and the principal collection layer 22 can be bonded by utilizing thermal lamination using a hot-melt rein or by using adhesion utilizing reactive adhesives.

[Method for producing filter medium]

Next, the method for producing the filter medium 10 will be described.

First, each of a member that becomes a air-permeable support layer 26 and a member that becomes the principal collection layer 22 is prepared, and according to partial melting of the air-permeable support layer 26 caused by heating or melting of a hot-melt resin, or by using adhesion utilizing reactive adhesives, the member that becomes a air-permeable support layer 26 and the member that becomes the principal collection layer 22 are adhered to obtain a first laminate.

Meanwhile, each of a member that becomes the air-permeable cover layer 24 and a member that becomes the pre-collection layer 20 is prepared, and by utilizing ultrasonic thermal fusion, adhesion using reactive adhesives or thermal lamination using hot-melt resin, the member that becomes the air-permeable cover layer 24 and the member that becomes the pre-collection layer 20 are adhered to obtain a second laminate.

Finally, the member that becomes the principal collection layer 22 of the first laminate and the member that becomes the pre-collection layer 20 of the second laminate are arranged such that they are positioned in the inner side thereof, and by using thermal lamination or adhesion utilizing reactive adhesives or the like, the member that becomes the principal collection layer 22 and the member that becomes the pre-collection layer 20 are bonded to obtain the filter medium 10.

Producing the filter medium 10 by separately preparing the first laminate and the second laminate as described above is to laminate the principal collection layer 22 with extremely low rigidity on the filter medium 10 with good precision and also to improve the workability for laminating the principal collection layer 22 during production.

(Modification Example 1)

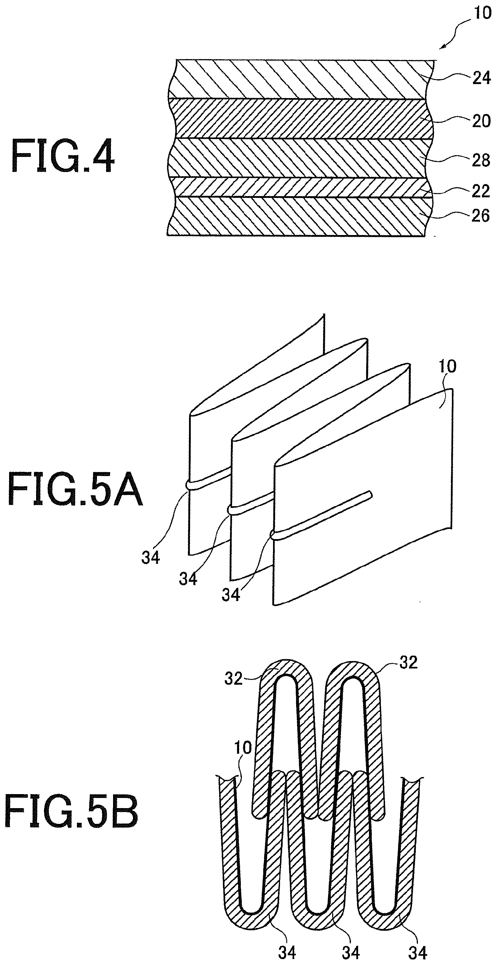

According to the filter medium 10 of the present embodiment, as illustrated in Fig. 2, the air-permeable support layer 26 is positioned on a downstream side of the air flow relative to the principal collection layer 22. In the filter medium of Modification Example 1, as illustrated in Fig. 4, not only the air-permeable support layer 26 is positioned on the downstream side of the air flow relative to the principal collection layer 22 but also the air-permeable support layer 28 is positioned on the upstream side in the air flow relative to the principal collection layer 22. Specifically, in the filter medium 10, the air-permeable cover layer 24, the pre-collection layer 20, the air-permeable support layer 28, the principal collection layer 22, and the air-permeable support layer 26 are laminated in the order from the upstream side in the air flow. The air-permeable support layer 28 may have a constitution which is either equal to or different from the constitution of the air-permeable support layer 26. The pressure loss in the air-permeable support layer 28 is 10 Pa or less under the conditions of the air flow rate of 5.3 cm/second, and as long as the pressure loss is substantially 0 or approximately 0, material and structure of the air-permeable support layer 28 are not particularly limited.

By forming the air-permeable support layer 28, the principal collection layer 22 can be more strongly supported compared to the filter medium 10 illustrated in Fig. 2, and also the interlayer rupture in a space with the pre-collection layer 20 can be more surely suppressed.

Further, also in Modification Example 1, the air-permeable cover layer 24 is formed in the outermost surface layer of the filter medium 10 on the most upstream side of the air flow, and thus deformation of the surface of the filter medium 10 is suppressed against the pressing force of the shape maintaining member 12, and thus the structure resistance in the air filter unit 15 can be suppressed.

(Modification Example 2)

According to the present embodiment, a separator having a wave-like shape obtained by corrugation processing of a thin plate is used as the shape maintaining member 12 of the filter medium 10 as illustrated in Fig. 1A. According to Modification Example 2, the spacers 32 and 34 using hot-melt resin in the mountain part and the valley part of the filter medium 10 with a zigzag shape is used as the shape maintaining member 12 as illustrated in Figs. 5A and 5B. Fig. 5A is a drawing illustrating the arrangement of the spacer 34 installed in the filter medium 10. Fig. 5B is a cross-sectional view of the filter medium 10 and the spacers 32 and 34 of Fig. 5A. In Fig. 5A, the filter medium 10 in a state of having slightly widened zigzag shape is illustrated. The spacers 32 and 34 are installed to cover part of the mountain part on a side opposite to the filter medium 10 and they maintain the zigzag shape. With respect to the spacers 32 and 34, deformation of the surface of the filter medium 10 is suppressed by the air-permeable cover layer 24 against the pressing force from the spacers 32 and 34 so that the structure resistance in the air filter unit can be suppressed.

(Modification Example 3)

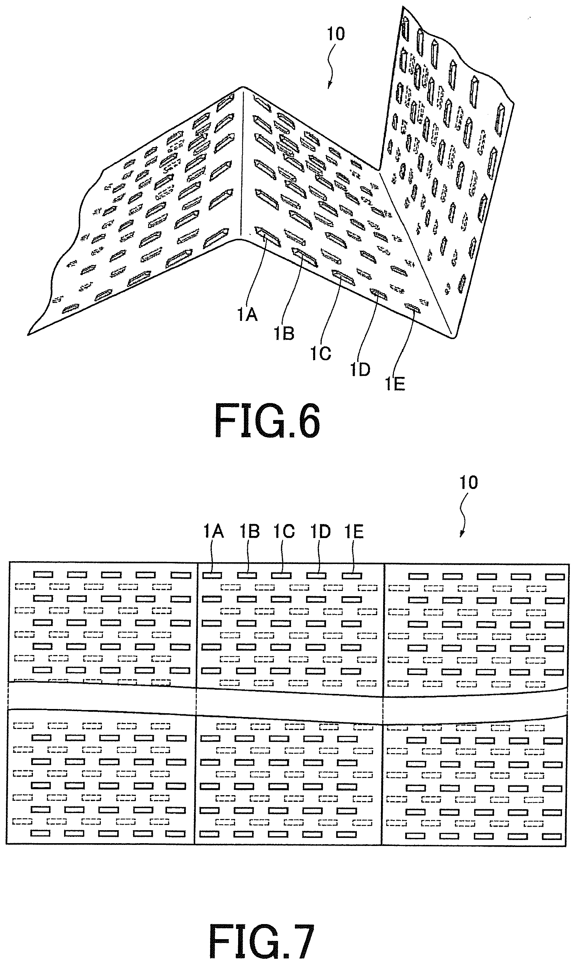

According to the present embodiment, a separator having a wave-like shape obtained by corrugation processing of a thin plate is used as the shape maintaining member 12 of the filter medium 10 as illustrated in Fig. 1A. However, in Modification Example 3, the shape maintaining member 12 is not used and the filter medium 10 itself has embossed protrusion parts as illustrated in Fig. 6, and the embossed protrusion parts have a shape maintaining function for maintaining the zigzag shape of the filter medium 10 when folded. In other words, the embossed protrusion parts are the shape maintaining part positioned in the mountain part or the valley part of the filter medium 10 for maintaining the zigzag shape of the filter medium 10.

Fig. 6 is a drawing illustrating the shape of the filter medium 10 of Modification Example 3 and Fig. 7 is a drawing illustrating the arrangement of the embossed protrusion parts when the filter medium 10 with a zigzag shape of Modification Example 3 is unfolded. The embossed protrusion parts are produced by using an apparatus which uses a roll type embossing mold or a flat plate type embossing mold.

Specifically, on the surface side and back side of the filter medium 10, the embossed protrusion parts 1A to 1E are formed, and when the filter medium 10 is folded by an mountain fold and an valley fold as illustrated in Fig. 6, the embossed protrusion parts 1A to 1E that are facing each other at the time of folding are brought into contact with each other so that the zigzag shape of the filter medium 10 can be maintained.

As illustrated in Fig. 6, the embossed protrusion parts 1A to 1E are formed on both surfaces of the filter medium 10 so that the adjacent filter medium 10 can maintain a space when folded. Herein, the embossed protrusion parts protruded toward the front side of the filter medium 10 become a convex protrusion and the embossed protrusion parts protruded toward the opposite side become a concave protrusion. In other words, the concave protrusion observed from a side having the filter medium 10 becomes a convex protrusion when observed from an opposite side.

With the aforementioned filter medium 10, deformation of the surface of the filter medium 10 is suppressed by the air-permeable cover layer 24 against the pressing force applied from the adjacent embossed protrusion parts of the filter medium 10, and thus the structure resistance in the filter unit can be suppressed.

Meanwhile, the outline shape of the embossed protrusion parts 1A to 1E can be selected from various shapes including, for example, a rectangle body, a cubicle, a prism, a cylinder, a hemisphere, a spherical band, a truncated pyramidal prism, a cone, a pyramid, a frustum of a right circular cone, or the like. Further, the embossed protrusion parts 1A to 1E that are facing each other do not necessarily have the identical outline shape.

A height of the embossed protrusion parts 1A to 1E is preferably 0.1 mm to 5.0 mm, or more preferably 0.2 mm to 3.5 mm. When the height is more than 5.0 mm, the filter medium 10 having the PTFE porous membrane may be broken during emboss processing. On the other hand, when the height is less than 0.5 mm, it may be difficult to maintain a gap in the filter medium 10 and also the structure resistance in the air filter unit is increased. Further, the arrangement number of the embossed protrusion parts 1A to 1E is not particularly limited, similar to the shape and dimension thereof.

Further, the height of the embossed protrusion parts 1A to 1E is the smallest in the deepest part of the folded valley part (that is, bottom part of the valley) and by increasing gradually the height of the embossed protrusion parts 1A to 1E, the zigzag shape of the filter medium 10 can be stably maintained as no excessive force is applied to the embossed protrusion parts 1A to 1E. According to the example illustrated in Fig. 6, the embossed protrusion parts 1A to 1E are formed such that the height of the embossed protrusion part 1E as a convex protrusion is the lowest, the height of the embossed protrusion part 1A is the highest, and the height gradually changes between them.

In the above, a mode illustrated by Modification Examples 2 and 3 are explained in addition to an embodiment using the separator illustrated in Figs. 1A and 1B. However, it is most preferable for the filter medium 10 for an air filter having the layer constitution illustrated in Fig. 2 or 4 to be used as the air filter unit 15 using the separator as the shape maintaining member 12 illustrated in Figs. 1A and 1B from the viewpoint of exhibiting the effect of the present embodiment.

[Characteristics of filter medium and air filter unit]

Characteristics of the filter medium and air filter unit that are used in the present embodiment are described.

(Pressure loss in filter medium)

A test sample with a circular shape and an effective area of 100 cm$^2$ is collected from the filter medium 10. The test sample is then set on a cylindrical filter medium holder, and after adjusting air flow such that the rate of air passing through the filter medium is 5.3 cm/second, pressure is measured by using a manometer on the upstream side and the downstream side of the test sample. Then, the difference in pressure between the upstream and the downstream is obtained as pressure loss in the filter medium 10.

(Collection efficiency of filter medium)

The test sample identical to the test sample used for measurement of the pressure loss in the filter medium 10 is set on a filter medium holder, and after adjusting air flow such that the rate of air passing through the filter medium is 5.3 cm/second, PSL (Polystyrene Latex) particles with a diameter of 0.3 $\mu$m are fed to the upstream side of the air flow. By using a light scattering type particle counter, concentration of the PSL particles are measured on the upstream side and the downstream side of the test sample and the collection efficiency of the filter medium 10 is obtained based on the following equation.

$$\text{Collection efficiency (\%)} = [1 - (\text{Concentration of PSL particles on downstream side/Concentration of PSL particles on upstream side})] \times 100$$

With regard to the collection efficiency of the pre-collection layer 20, the test sample was exposed for 1 day to vapor of IPA (isopropyl alcohol) to prepare it in a static eliminated state in order to exclude an influence of the increased collection efficiency that is caused by charging of the test sample.

(Thickness)

A load of 2.5 N on 10 mm$\phi$ test sample is applied, and the thickness value is read by using a dial thickness gauge.

(Average fiber diameter and geometric standard deviation)

A photographic image of the surface of the test sample was taken by using a scanning type electron microscope (SEM) with a magnification ratio of 1000 to 5000. Two perpendicular lines are drawn on one photographic image and thickness of the image of the fiber crossing those lines was measured as a fiber diameter. The number of the measured fibers was 200 or higher. Using the fiber diameter obtained therefrom, a lognormal plot was made by having the fiber diameter as a horizontal axis and cumulative frequency as a vertical axis. The value at a cumulative frequency of 50% was taken as average fiber diameter. The geometric standard deviation representing the distribution of the fiber diameter was obtained based on the following equation after reading the fiber diameter at a cumulative frequency of 50% and the fiber diameter at a cumulative frequency of 84% from the result of the aforementioned lognormal plot.

$$\text{Geometric standard deviation } [\text{-}] = \text{Fiber diameter at a cumulative frequency of } 84\%/\text{Fiber diameter at a cumulative frequency of } 50\%$$

(Bending rigidity)

A test sample with a size of 150 mm x 20 mm in long shape was cut out from the filter medium 10 and placed in a manner to stand still such that it is horizontally protruded from a horizontal plate while the region within 40 mm from one end in the length direction of the test sample is saved as a pressing margin. The protrusion length 110 mm at that time was the measurement strength, and the displacement in vertical direction, that is, a sagging from the horizontal plate by the self-weight, was measured. The bending rigidity was calculated based on the following equation.

$$\text{Bending rigidity } [\text{g weight} \cdot \text{mm}] = \text{Weight per unit area of the filter medium } 10 \times (\text{Measurement length})^4/8/\text{Displacement}$$

(Pressure loss in air filter unit)

Pleats processing was performed by using the filter medium 10 to produce a processed filter medium with a zigzag shape with a size of 610 mm x 610 mm x 290 mm (height x width x inner length). The shape maintaining member 12 was positioned between valley parts of the processed filter medium to maintain the shape, and in the same state, the processed filter medium was maintained by a separator as the shape maintaining member 12 to produce the air filter unit 15.

The produced air filter unit 15 was set in a rectangular duct, and after adjusting air flow such that the wind amount is 56 $m^3$/minute, pressure is measured by using a manometer on the upstream side and the downstream side of the air filter unit 15. Then, the difference in pressure between the upstream and the downstream is obtained as pressure loss in the air filter unit 15.

(Collection efficiency of air filter unit)

With regard to the collection efficiency of air filter unit 15, the air filter unit 15 was set in a rectangular duct similar to the measurement of pressure loss in the air filter unit, and after adjusting air flow such that the wind amount is 56 $m^3$/minute, PSL particle with a diameter of 0.3 $\mu$m were fed to the upstream side of the air filter unit 15. By using a light scattering type particle counter, concentration of the PSL particles on the upstream side and the downstream side of the air filter unit 15 were measured and the collection efficiency of the air filter unit 15 was obtained based on the same equation as the one used for obtaining the collection efficiency of filter medium.

(Pressure loss originating from structure of air filter unit)

From the pressure loss in the air filter unit 15 and the pressure loss in the filter medium 10, the pressure loss originating from structure of air filter unit 15 (that is, structure resistance) was calculated, according to the following equation. At the time of measuring the pressure loss of the air filter unit 15, the rate of air passing through the filter medium in the air filter unit 15 was 4 cm/second. As such, the pressure loss in the filter medium 10 was calibrated by using the rate of air passing through the filter medium as illustrated in the following equation.

$$\text{Structure resistance of air filter unit} = \text{Pressure loss in the air filter unit } 15 - \text{Pressure loss in the filter medium } 10 \times (4.0/5.3)$$

(Life span of air filter unit)

Life span of an air filter unit is represented by an amount (g/m$^2$) of dust collected per unit area of the filter medium when the pressure loss is increased by 250 Pa compared to the initial pressure loss after air is blown in a real environment and with a standard wind amount (for example, 56 m$^3$/minute). Since a PTFE porous membrane is used for the principal collection layer 22 in the present embodiment, a denser fiber structure is yielded compared to a glass fiber filter medium which has been conventionally used. In a PTFE porous membrane, clogging caused by dust occurs fast, and thus when it is used in an environment with high dust collection load such as an outside air treatment unit, increased pressure loss in the air filter unit within a short period of time easily becomes a problem. Thus, the amount (g/m$^2$) of dust collected per unit area of the filter medium at the time of having the pressure loss increased by 250 Pa compared to the initial pressure loss is used as an indicator of life span. The higher amount of dust (g/m$^2$) represents longer life span. The dust amount of 10 (g/m$^2$) or higher means the life span equivalent to the life span of the glass fiber filter medium which has been conventionally used, and it exhibits excellent life span as an air filter unit.

[EXAMPLES]

Herein below, to investigate the effect of the present embodiment, a filter unit using the filter medium illustrated below was produced (Samples 1 to 5).

(Sample 1)

· Production of the principal collection layer 22 (PTFE porous membrane)

As a liquid phase lubricating agent, 33.5% by mass of hydrocarbon oil ("IP Solvent 2028", manufactured by Idemitsu Kosan Co., Ltd.) was added at 20°C per kilogram of PTFE fine powder ("POLYFLON F106", manufactured by Daikin Industries, Ltd.) with an average molecular weight of 6,500,000, and mixed therein. Next, the obtained mixture was extruded by using a paste extruder to obtain a molded body with a cylinder shape. The cylinder-shaped molded body was molded into a film shape by a calendar roll heated to 70°C to obtain a PTFE film. The film was passed through a hot-air drying oven at 250°C to evaporate and remove the hydrocarbon oil, thereby obtaining a non-sintered band-like PTFE film having an average thickness of 200 $\mu$m and an average width of 150 mm. Next, the non-sintered PTFE film was stretched at a stretch ratio of 5 times in its length direction. The stretch temperature was 250°C. Next, the stretched non-sintered film was stretched at a stretch ratio of 32 times in its width direction by using a tenter capable of continuous clipping followed by thermal fixation. The stretch temperature was 290°C and the thermal fixation temperature was 390°C. Accordingly, the principal collection layer 22 as the PTFE porous membrane (a filling ratio of 4.0%, an average fiber diameter of 0.053 $\mu$m, and a thickness of 10 $\mu$m) was obtained.

· Air-permeable support layers 26 and 28

As the air-permeable support layers 26 and 28 illustrated in Fig. 4, spun-bond non-woven fabric consisting of fibers with core/sheath structure in which PET is used for core and PE is used for sheath was used (an average fiber diameter of 24 $\mu$m, a weight per unit area of 40 g/m$^2$, and a thickness of 0.20 mm). On both surfaces of the obtained PTFE porous membrane as the principal collection layer 22, the aforementioned spun-bond non-woven fabric was bonded by thermal fusion by using a lamination apparatus to obtain a PTFE laminate. Pressure loss and dust collection efficiency of thus-obtained PTFE laminate were 80 Pa and 99.99%, respectively, according to the aforementioned measurement method. The pressure loss and dust collection efficiency are roughly the characteristics of the PTFE porous membrane.

· Air-permeable cover layer 24

As the air-permeable cover layer 24, a spun-bond non-woven fabric consisting of PP, which is continuous fiber with an average fiber diameter of 20 $\mu$m, was used (a weight per unit area of 10 g/m$^2$ and a thickness of 0.15 mm).

· Pre-collection layer 20

As the pre-collection layer 20, a melt-blown non-woven fabric consisting of PP, which is a fiber with an average fiber diameter of 1.2 $\mu$m, was used (a weight per unit area of 15 g/m$^2$ and a thickness of 0.30 mm). Then, the spun-bond non-woven fabric as the air-permeable cover layer 24 and the melt-blown non-woven fabric as the pre-collection layer 20 were subjected to thermal lamination at 110°C by using 2 g/m$^2$ of an ethylene-vinyl acetate copolymer (EVA) hot-melt adhesives to obtain a PP laminate (a thickness of 0.3 mm). Pressure loss and dust collection efficiency of thus-obtained PP laminate were 60 Pa and 60%, respectively, according to the aforementioned measurement method. The pressure loss and dust collection efficiency are roughly the characteristics of the melt-blown non-woven fabric.

Finally, the PTFE laminate and the PP laminate were subjected to thermal lamination at 110°C by using 2 g/m$^2$ of EVA hot-melt adhesives to the filter medium 10 having the layer constitution illustrated in Fig. 4. A thickness of the filter medium 10 was 0.64 mm.

Pressure loss and dust collection efficiency of the filter medium 10 were 140 Pa and 99.995%, respectively, according to the aforementioned measurement method. There was no increase in pressure loss caused by the thermal lamination. The pressure loss and dust collection efficiency are roughly the characteristics of the pre-collection layer 20 and the principal collection layer 22.

The produced filter medium 10 was subjected to pleats processing so as to have an outside fold and an inside fold every 260 mm by using a rotary type folding machine, and thus a processed filter medium having a zigzag shape as illustrated in Fig. 1A was prepared. After that, a separator prepared by corrugation processing of an aluminum plate was inserted into the concave part of the filter medium 10 to obtain a filter pack with 590 mm length x 590 mm width. The number of the pleats was 79 at that time.

The obtained filter pack was fixed in the aluminum frame body 14 which has an outer dimension of 610 mm x 610 mm (length x width), an inner dimension of 580 mm x 580 mm (length x width), and an inner length of 290 mm. Periphery of the filter pack was adhered to the frame body 14 and sealed by using urethane adhesives to obtain the air filter unit 15.

(Sample 2)

The filter medium used for Sample 2 has the principal collection layer 22 (that is, PTFE porous membrane), the air-permeable support layers 26 and 28, the pre-collection layer 20, and the air-permeable cover layer 24 such as the layer constitution illustrated in Fig. 4. With regard to the air filter unit 15 of Sample 2, the difference from the air filter unit 15 of Sample 1 is that, for the pre-collection layer 20 of the filter medium 10, a melt-blown non-woven fabric consisting of PP, that is, a fiber with an average fiber diameter of 0.9 $\mu$m (a weight per unit area of 10 g/m$^2$ and a thickness of 0.29 mm), was used. Other than that, it was the same as Sample 1. Pressure loss and dust collection efficiency of the filter medium 10 used for Sample 2 were 175 Pa and 99.998%, respectively, and the thickness of the filter medium 10 was 0.62 mm.

(Sample 3)

The filter medium used for Sample 3 has the principal collection layer 22 (that is, PTFE porous membrane), the air-permeable support layers 26 and 28, the pre-collection layer 20, and the air-permeable cover layer 24 such as the layer constitution illustrated in Fig. 4. With regard to the air filter unit 15 of Sample 3, the difference from the air filter unit 15 of Sample 1 is that, for the pre-collection layer 20, a melt-blown non-woven fabric consisting of PP, that is, a fiber with an average fiber diameter of 2.0 $\mu$m (a weight per unit area of 30 g/m$^2$ and a thickness of 0.40 mm), was used. Other than that, it was the same as Sample 1. Pressure loss and dust collection efficiency of the filter medium 10 used for Sample 3 were 165 Pa and 99.993%, respectively, and the thickness of the filter medium 10 was 0.72 mm.

(Sample 4)

The filter medium used for Sample 4 has the same layer constitution (the principal collection layer 22 (that is, PTFE porous membrane), the air-permeable support layers 26 and 28, and the pre-collection layer 20) as the layer constitution illustrated in Fig. 4. With regard to the air filter unit of Sample 4, the difference from the air filter unit 15 of Sample 1 is that the air-permeable cover layer 24 is not formed in Sample 4. Other than that, it was the same as Sample 1. Pressure loss and dust collection efficiency of the filter medium used for Sample 4 were 140 Pa and 99.995%, respectively, and the thickness of the filter medium was 0.62 mm.

(Sample 5)

The filter medium used for Sample 5 has the same layer constitution (the principal collection layer 22 (that is, PTFE porous membrane), the air-permeable support layers 26 and 28, and the pre-collection layer 20) as the layer constitution illustrated in Fig. 4. With regard to the air filter unit of Sample 5, the difference from the air filter unit of Sample 1 is that the air-permeable cover layer 24 is not formed in the filter medium for Sample 5 and a melt-blown non-woven fabric consisting of PP, that is, a fiber with an average fiber diameter of 2.0 $\mu$m (a weight per unit area of 30 g/m$^2$ and a thickness of 0.40 mm), was used for the pre-collection layer like Sample 3. Other than that, it was the same as Sample 3. Pressure loss and dust collection efficiency of the filter medium used for Sample 5 were 165 Pa and 99.993%, respectively, and the thickness of the filter medium was 0.72 mm.

By using the filter medium of such samples, pressure loss and dust collection efficiency in an air filter unit were measured. Further, from the measurement result of pressure loss, structure resistance was measured for each sample by using the aforementioned equation for structure resistance of an air filter unit. The results are illustrated in the following Tables 1 and 2.

[Table 1]

| | Pre-collection layer | | | | | Filter medium | | |
|---|---|---|---|---|---|---|---|---|
| | Pressure loss (Pa) | Collection efficiency (%) | Weight per unit area (g/m$^2$) | Thickness (mm) | Average fiber diameter ($\mu$m) | Pressure loss (Pa) | Collection efficiency (%) | Thickness (mm) |
| Sample 1 | 60 | 60 | 15 | 0.30 | 1.2 | 140 | 99.995 | 0.64 |
| Sample 2 | 95 | 75 | 10 | 0.29 | 0.9 | 175 | 99.998 | 0.62 |
| Sample 3 | 85 | 50 | 30 | 0.40 | 2.0 | 165 | 99.993 | 0.72 |
| Sample 4 | 60 | 60 | 15 | 0.28 | 1.2 | 140 | 99.995 | 0.62 |
| Sample 5 | 85 | 50 | 30 | 0.40 | 2.0 | 165 | 99.993 | 0.72 |

[Table 2]

| | Air filter unit | | | |
|---|---|---|---|---|
| | Pressure loss (Pa) | Collection efficiency (%) | Structure resistance (Pa) | Life span (dust amount) |
| Sample 1 | 190 | 99.9992 | 84 | 10 (g/m$^2$) or higher |
| Sample 2 | 214 | 99.9995 | 82 | 10 (g/m$^2$) or higher |
| Sample 3 | 250 | 99.9990 | 125 | 10 (g/m$^2$) or higher |
| Sample 4 | 220 | 99.9992 | 114 | 10 (g/m$^2$) or higher |
| Sample 5 | 285 | 99.9989 | 160 | 10 (g/m$^2$) or higher |

The difference between Sample 1 and Sample 4 is the presence or absence of the air-permeable cover layer 24. It is found that the Sample 1 having the air-permeable cover layer 24 has significantly reduced structure resistance compared to Sample 4 having no air-permeable cover layer 24. Further, Sample 3 and Sample 5 both have the pre-collection layer 20 with an average fiber diameter of 2.0 $\mu$m, while Sample 3 has the air-permeable cover layer 24 and Sample 5 does not have the air-permeable cover layer 24. Also in those cases, the structure resistance of Sample 3 having the air-permeable cover layer 24 has a significantly reduced structure resistance compared to the structure resistance of Sample 5 having no air-permeable cover layer 24. Based on these results, it was found that the air-permeable cover layer 24 can reduce the pressure loss originating from the structure of the air filter unit 15 (that is, structure resistance).

Meanwhile, although the structure resistance of Sample 2 is as low as Sample 1, but the pressure loss in the air filter unit 15 is high. It is based on an increase in the pressure loss in the filter medium 10, which is caused by the reduced average fiber diameter of the pre-collection layer 20. For such reasons, to suppress the pressure loss in the air filter unit 15, it is important to reduce the pressure loss in the pre-collection layer 20 as well as the structure resistance. Thus, by having the average fiber diameter equal to or larger than 1 $\mu$m but smaller than 2 $\mu$m in the pre-collection layer 20, the pressure loss in the pre-collection layer 20 can be suppressed. In fact, the pressure loss in the air filter unit 15 of Sample 1, in which the average fiber diameter in the pre-collection layer 20 is equal to or larger than 1 $\mu$m but smaller

than 2 µm, is reduced compared to Sample 2.

In Sample 3, to maintain the collection efficiency in the filter medium 10 at almost the same value as Sample 1, a thickness of the filter medium 10 was increased by increasing the weight per unit area in the pre-collection layer 20. For such reasons, structure resistance was also increased in Sample 3 compared to Samples 1 and 2. However, the structure resistance was reduced compared to Sample 5 having the same structure of the pre-collection layer 20 without having the air-permeable cover layer 24.

From Table 1, it was also found that, when the pressure loss is increased by 250 Pa compared to the initial pressure loss, dust amount (g/m$^2$) collected per unit area of the filter medium is 10 (g/m$^2$) or higher for any one of Samples 1 to 5, and the life span is almost the same as the one of the air filter unit having a glass fiber filter medium of a related art that is used instead of the PTFE porous membrane.

As described above, to reduce the pressure loss in the air filter unit, it is important to reduce the structure resistance in the air filter unit as well as the pressure loss caused by the filter medium. At that time, as illustrated in Examples, by forming the air-permeable cover layer on the upstream side of an air flow of the pre-collection layer, in particular, on the most upstream side of the filter medium, the structure resistance can be reduced.

The filter medium for an air filter, air filter unit, and method for producing a filter medium for an air filter of the present invention are described in detail in the above.

REFERENCE SIGNS LIST

| | |
|---|---|
| 10 | Filter medium for air filter |
| 12 | Shape maintaining member |
| 14 | Frame body |
| 15 | Air filter unit |
| 20 | Pre-collection layer |
| 22 | Principal collection layer |
| 24 | Air-permeable cover layer |
| 26, 28 | Air-permeable support layer |
| 32, 34 | Spacer |
| 1A, 1B, 1C, 1D, 1E | Embossed protrusion parts |

**Claims**

1. A filter medium for an air filter for collecting dust in an air flow, the filter medium (10) comprising:

   a pre-collection layer (20) for collecting a part of the dust in the air flow;
   a principal collection layer (22) that includes a porous polytetrafluoroethylene film and is positioned on a downstream side of the air flow relative to the pre-collection layer (20) to collect dust that passes through the pre-collection layer (20); and
   an air-permeable cover layer (24) that is positioned in the outermost surface layer on an upstream side of the air flow to allow dust in the air flow to pass therethrough and to suppress deformation of the surface of the filter medium (10) for an air filter caused by pressing force from an outside,
   an air-permeable support layer (26) which is positioned on the downstream side of the air flow relative to the principal collection layer (22) to support the principal collection layer (22),
   **characterized in that**
   the air-permeable cover layer (24) has a thickness of 0.3 mm or less and an average fiber diameter of 10 to 30 µm, and a weight per unit area of 5 to 20 g/m$^2$,
   wherein the air-permeable cover (24) layer is constituted with a spun-bond non-woven fabric.

2. The filter medium for an air filter according to claim 1, wherein the air-permeable cover layer (24) is adjacent to the pre-collection layer (20).

3. The filter medium for an air filter according to claim 1 or 2, wherein
   the air-permeable cover layer (24) comprises a material of a fibrous material selected from a group consisting of polyethylene (PE), polypropylene (PP), and polyethylene terephthalate (PET),
   the pre-collection layer (20) comprises a material of a fibrous material selected from a group consisting of polyethylene (PE), polypropylene (PP), polyethylene terephthalate (PET), polybutylene terephthalate (PBT), polyamide (PA), polyacrylonitrile (PAN), polyvinylidene fluoride (PVdF), polyvinyl alcohol (PVA), and polyurethane (PU), and has an average fiber diameter of the fibrous material of 0.1 to 5 $\mu$m, a weight per unit area of 5 to 50 g/m$^2$, and a thickness of less than 0.4 mm,

the principal collection layer (22) consists of a PTFE porous membrane, and has an average fiber diameter of a fibrous material of 0.1 $\mu$m or less, a filling ratio of 8% or less, and a film thickness thereof is 50 $\mu$m or less, wherein pressure loss in the air-permeable cover layer (24) is 10 Pa or less, pressure loss in the pre-collection layer (20) is 80 Pa or less, and pressure loss in the principal collection layer (22) is 100 Pa or less, when a flow rate of the air flow is 5.3 cm/second, and

wherein efficiency for collecting dust with a particle diameter of 0.3 $\mu$m by the pre-collection layer (20) is 50% or more for the pre-collection layer (20) in a static eliminated state and efficiency for collecting dust with a particle diameter of 0.3 $\mu$m by the principal collection layer (22) is 99.9% or more.

4. The filter medium for an air filter according to any one of claims 1 to 3, wherein the pre-collection layer (20) is constituted with fiber materials that are produced by a melt-blown method or an electrospinning method.

5. The filter medium for an air filter according to claim 4, wherein an average fiber diameter of the fiber materials in the pre-collection layer (20) is 1 $\mu$m or more but less than 2 $\mu$m.

6. The filter medium for an air filter according to any one of claims 1 to 5, wherein a thickness of the pre-collection layer (20) is less than 0.4 mm.

7. The filter medium for an air filter according to claim 1, wherein the air-permeable support layer (26) is constituted with a spun-bond non-woven fabric.

8. An air filter unit comprising:

as a filter medium (10) for an air filter for collecting dust in an air flow, a processed filter medium with a zigzag shape obtained by a pleats processing of a filter medium for an air filter according to any one of the previous claims,
a shape maintaining part (12) positioned in a mountain part or a valley part of the processed filter medium (10) for maintaining the zigzag shape of the processed filter medium (10); and
a frame body (14) for maintaining the processed filter medium (10) with maintained zigzag shape.

9. A method for producing a filter medium for an air filter for collecting dust in an air flow, wherein the filter medium (10) for an air filter includes a pre-collection layer (20) for collecting part of the dust in the air flow, a principal collection layer (22) that includes a porous polytetrafluoroethylene film and is positioned on a downstream side of the air flow relative to the pre-collection layer to collect dust that passes through the pre-collection layer (20), a air-permeable cover layer (24) that is positioned in an outermost surface layer on an upstream side of the air flow to allow dust in the air flow to pass therethrough and to suppress deformation of the surface of the filter medium (10) for an air filter caused by pressing force from an outside, and a air-permeable support layer (26) that is positioned on the downstream side of the air flow relative to the principal collection layer (22) to support the principal collection layer (22), the method comprising:

obtaining a first laminate by laminating a member that becomes a air-permeable support layer (26) and a member that becomes the principal collection layer (22);
obtaining a second laminate by laminating a member that becomes the air-permeable cover layer (24) and a member that becomes the pre-collection layer (20); and
laminating in a manner such that the member that becomes the principal collection layer (22) in the first laminate and the member that becomes the pre-collection layer (20) in the second laminate are positioned in the inner side thereof,
**characterized in that**
the air-permeable cover layer (24) has a thickness of 0.3 mm or less and an average fiber diameter of 10 to 30 $\mu$m, and a weight per unit area of 5 to 20 g/m$^2$,
wherein the air-permeable cover layer (24) is constituted with a spun-bond non-woven fabric.

**Patentansprüche**

1. Filtermedium für einen Luftfilter zum Auffangen von Staub in einer Luftströmung, wobei das Filtermedium (10) umfasst:

   eine Vorauffangschicht (20) zum Auffangen eines Teils des Staubs in der Luftströmung;
   eine Hauptauffangschicht (22), die einen porösen Polytetrafluorethylen-Film enthält und auf einer stromabwärtigen Seite der Luftströmung relativ zu der Vorauffangschicht (20) positioniert ist, um Staub aufzufangen, der durch die Vorauffangschicht (20) hindurchgeht; und
   eine luftdurchlässige Deckschicht (24), die in einer äußersten Oberflächenschicht auf einer stromaufwärtigen Seite der Luftströmung angeordnet ist, um es Staub in der Luftströmung zu ermöglichen, hindurchzutreten und um eine Verformung der Oberfläche des Filtermediums (10) für einen Luftfilter, die durch eine Druckkraft von außen verursacht wird, zu unterdrücken,
   eine luftdurchlässige Trägerschicht (26), die auf der stromabwärtigen Seite der Luftströmung relativ zur Hauptauffangschicht (22) positioniert ist, um die Hauptauffangschicht (22) zu tragen, und
   **dadurch gekennzeichnet, dass** die luftdurchlässige Deckschicht (24) eine Dicke von 0,3 mm oder weniger, einen mittleren Faserdurchmesser von 10 bis 30 $\mu$m und ein Flächengewicht von 5 bis 20 g/m$^2$ aufweist, wobei die luftdurchlässige Deckschicht (24) aus einem spinngebundenen Vliesstoff ausgebildet ist.

2. Filtermedium für einen Luftfilter nach Anspruch 1, bei dem die luftdurchlässige Deckschicht (24) zu der Vorauffangschicht (20) angrenzend ist.

3. Filtermedium für einen Luftfilter nach Anspruch 1 oder 2, bei dem die luftdurchlässige Deckschicht (24) ein Material aus einem Fasermaterial umfasst, das aus einer Gruppe ausgewählt ist, die aus Polyethylen (PE), Polypropylen (PP) und Polyethylenterephthalat (PET) besteht,
   die Vorauffangschicht (20) ein Material aus einem Fasermaterial umfasst, das aus einer Gruppe ausgewählt ist, die Polyethylen (PE), Polypropylen (PP), Polyethylenterephthalat (PET), Polybutylenterephthalat (PBT), Polyamid (PA), Polyacrylnitril PAN), Polyvinylidenfluorid (PVdF), Polyvinylalkohol (PVA) und Polyurethan (PU) besteht und einen mittleren Faserdurchmesser des Fasermaterials von 0,1 bis 5 $\mu$m, ein Flächengewicht von 5 bis 50 g/m$^2$ und einer Dicke von weniger als 0,4 mm aufweist,
   die Hauptauffangschicht (22) aus einer porösen PTFE-Membran besteht und einen durchschnittlichen Faserdurchmesser eines Fasermaterials von 0,1 $\mu$m oder weniger, ein Füllverhältnis von 8% oder weniger und eine Filmdicke von 50 $\mu$m oder weniger aufweist,
   wobei der Druckverlust in der luftdurchlässigen Deckschicht (24) 10 Pa oder weniger beträgt, der Druckverlust in der Vorauffangschicht (20) 80 Pa oder weniger beträgt und der Druckverlust in der Hauptauffangschicht (22) 100 Pa oder weniger beträgt, wenn eine Strömungsgeschwindigkeit der Luftströmung 5,3 cm/Sekunde beträgt, und wobei die Effizienz zum Auffangen von Staub mit einem Partikeldurchmesser von 0,3 $\mu$m durch die Vorauffangschicht (20) 50% oder mehr ist, in einem statischen Eliminierungszustand und die Effizienz zum Auffangen von Staub mit einem Teilchendurchmesser von 0,3 $\mu$m durch die Hauptsammelschicht (22) 99,9% oder mehr ist.

4. Filtermedium für einen Luftfilter nach einem der Ansprüche 1 bis 3, bei dem die Vorauffangschicht (20) aus Fasermaterialien besteht, die durch ein Schmelzblasverfahren oder ein Elektrospinnverfahren hergestellt sind.

5. Filtermedium für einen Luftfilter nach Anspruch 4, bei dem der mittlere Faserdurchmesser der Fasermaterialien der Vorauffangschicht (20) 1 $\mu$m oder mehr, aber weniger als 2 $\mu$m ist.

6. Filtermedium für einen Luftfilter nach einem der Ansprüche 1 bis 5, bei dem die Dicke der Vorauffangschicht (20) kleiner ist als 0,4 mm.

7. Filtermedium für einen Luftfilter nach Anspruch 1, bei dem die luftdurchlässige Trägerschicht (26) aus einem Spinnvliesstoff besteht.

8. Luftfiltereinheit umfassend:

   als Filtermedium (10) für einen Luftfilter zum Auffangen von Staub in einer Luftströmung, ein prozessiertes Filtermedium mit einer Zickzackform, erhalten durch eine Faltenverarbeitung eines Filtermediums für einen Luftfilter nach einem der vorhergehenden Ansprüche,
   ein Formaufrechterhaltungsteil (12), das in einem Erhöhungsteil oder einem Talteil des prozessierten Filtermediums (10) angeordnet ist, um die Zickzackform des verarbeiteten Filtermediums (10) aufrechtzuerhalten; und einen Rahmenkörper (14) zum Halten des bearbeiteten Filtermediums (10) mit einer aufrechterhaltenen Zickzackform.

9. Verfahren zum Herstellen eines Filtermediums für einen Luftfilter zum Auffangen von Staub in einer Luftströmung, wobei das Filtermedium (10) für einen Luftfilter eine Vorauffangschicht (20) zum Auffangen eines Teils des Staubs in der Luftströmung, eine Hauptauffangschicht (22), die einen porösen Polytetrafluorethylen-Film enthält und auf einer stromabwärtigen Seite der Luftströmung relativ zu der Vorauffangschicht (20) positioniert ist, um Staub aufzufangen, der durch die Vorauffangschicht (20) hindurchgeht, eine luftdurchlässige Deckschicht (24), die in einer äußersten Oberflächenschicht auf einer stromaufwärtigen Seite der Luftströmung angeordnet ist, um es Staub in der Luftströmung zu ermöglichen, hindurchzutreten und um eine Verformung der Oberfläche des Filtermediums (10) für einen Luftfilter, die durch eine Druckkraft von außen verursacht wird, zu unterdrücken, und eine luftdurchlässige Trägerschicht (26) aufweist, die auf der stromabwärtigen Seite der Luftströmung relativ zur Hauptauffangschicht (22) positioniert ist, um die Hauptauffangschicht (22) zu tragen, wobei das Verfahren umfasst:

Erhalten eines ersten Laminats durch Laminieren eines Elements, das eine luftdurchlässige Trägerschicht (26) wird, und eines Elementes, das die Hauptauffangschicht (22) wird;
Erhalten eines zweiten Laminats durch Laminieren eines Elements, das die luftdurchlässige Deckschicht (24) wird, und eines Elements, das die Vorauffangschicht (20) wird; und
Laminieren in einer Weise, dass das Element, das die Hauptauffangschicht (22) in dem ersten Laminat wird, und das Element, das die Vorauffangschicht (20) in dem zweiten Laminat wird, in der Innenseite davon positioniert sind,
**dadurch gekennzeichnet, dass**
die luftdurchlässige Deckschicht (24) eine Dicke von 0,3 mm oder weniger, einen mittleren Faserdurchmesser von 10 bis 30 $\mu$m und ein Flächengewicht von 5 bis 20 g/m$^2$ aufweist,
wobei die luftdurchlässige Deckschicht (24) aus einem Spinnvliesstoff besteht.

**Revendications**

1. Matériau de filtration pour un filtre à air pour la collecte de poussière dans un flux d'air, le matériau de filtration (10) comprenant :

une couche de pré-collecte (20) pour la collecte d'une partie de la poussière dans le flux d'air;
une couche de collecte principale (22) qui comporte un film de polytétrafluoroéthylène poreux et est positionnée sur un côté en aval du flux d'air par rapport à la couche de pré-collecte (20) pour collecter de la poussière qui passe à travers la couche de pré-collecte (20) ; et
une couche de recouvrement perméable à l'air (24) qui est positionnée dans la couche de surface la plus extérieure sur un côté en amont du flux d'air pour permettre à de la poussière dans le flux d'air de passer à travers celle-ci et
supprimer une déformation de la surface du matériau de filtration (10) pour un filtre à air provoquée par une force de pressage en provenance d'un extérieur,
une couche de support perméable à l'air (26) qui est positionnée sur le côté en aval du flux d'air par rapport à la couche de collecte principale (22) pour supporter la couche de collecte principale (22),
**caractérisé en ce que**
la couche de recouvrement perméable à l'air (24) a une épaisseur de 0,3 mm ou
moins et un diamètre de fibre moyen de 10 à 30 $\mu$m, et un poids par unité de surface de 5 à 20 g/m$^2$,
dans lequel la couche de recouvrement perméable à l'air (24) est constituée d'un tissu non tissé filé-lié.

2. Matériau de filtration pour un filtre à air selon la revendication 1, dans lequel la couche de recouvrement perméable à l'air (24) est adjacente à la couche de pré-collecte (20).

3. Matériau de filtration pour un filtre à air selon la revendication 1 ou 2, dans lequel la couche de recouvrement perméable à l'air (24) comprend un matériau d'un matériau fibreux sélectionné dans un groupe constitué de polyéthylène (PE), polypropylène (PP), et polyéthylène téréphtalate (PET),
la couche de pré-collecte (20) comprend un matériau d'un matériau fibreux sélectionné dans un groupe constitué de polyéthylène (PE), polypropylène (PP), polyéthylène téréphtalate (PET), polybutylène téréphtalate (PBT), polyamide (PA), polyacrylonitrile (PAN), fluorure de polyvinylidène (PVdF), alcool de polyvinyle (PVA), et polyuréthane (PU), et a un diamètre de fibre moyen du matériau fibreux de 0,1 à 5 $\mu$m, un poids par surface unitaire de 5 à 50 g/m$^2$, et une épaisseur inférieure à 0,4 mm,

la couche de collecte principale (22) est constituée d'une membrane poreuse de PTFE, et a un diamètre de fibre moyen d'un matériau fibreux de 0,1 $\mu$m ou moins, un taux de remplissage de 8 % ou moins, et une épaisseur de film de celle-ci est de 50 $\mu$m ou moins,

dans lequel une perte de pression dans la couche de recouvrement perméable à l'air (24) est de 10 Pa ou moins, une perte de pression dans la couche de pré-collecte (20) est de 80 Pa ou moins, et une perte de pression dans la couche de collecte principale (22) est de 100 Pa ou moins, lorsqu'un débit du flux d'air est de 5,3 cm/seconde, et

dans lequel l'efficacité de collecte de poussière avec un diamètre de particule de 0,3 $\mu$m par la couche de pré-collecte (20) est de 50 % ou plus pour la couche de pré-collecte (20) dans un état éliminé statique, et l'efficacité de collecte de poussière avec un diamètre de particule de 0,3 $\mu$m par la couche de collecte principale (22) est de 99,9 % ou plus.

4. Matériau de filtration pour un filtre à air selon l'une quelconque des revendications 1 à 3, dans lequel la couche de pré-collecte (20) est constituée de matériaux fibreux qui sont produits par un procédé de fusion-soufflage ou un procédé d'électrofilature.

5. Matériau de filtration pour un filtre à air selon la revendication 4, dans lequel un diamètre de fibre moyen des matériaux fibreux dans la couche de pré-collecte (20) est de 1 $\mu$m ou plus, mais inférieur à 2 $\mu$m.

6. Matériau de filtration pour un filtre à air selon l'une quelconque des revendications 1 à 5, dans lequel une épaisseur de la couche de pré-collecte (20) est inférieure à 0,4 mm.

7. Matériau de filtration pour un filtre à air selon la revendication 1, dans lequel la couche de support perméable à l'air (26) est constituée d'un tissu non tissé filélié.

8. Unité de filtre à air comprenant :

en tant que matériau de filtration (10) pour un filtre à air pour la collecte de poussière dans un flux d'air, un matériau de filtration traité avec une forme de zigzag obtenue par un traitement de plis d'un matériau de filtration pour un filtre à air selon l'une quelconque des revendications précédentes,

une partie de maintien de forme (12) positionnée dans une partie de crête ou une partie de vallée du matériau de filtration traité (10) pour le maintien de la forme en zigzag du matériau de filtration traité (10) ; et

un corps de cadre (14) pour le maintien du matériau de filtration traité (10) avec une forme en zigzag maintenue.

9. Procédé de production d'un matériau de filtration pour un filtre à air pour la collecte de poussière dans un flux d'air, dans lequel le matériau de filtration (10) pour un filtre à air comporte une couche de pré-collecte (20) pour la collecte d'une partie de la poussière dans le flux d'air, une couche de collecte principale (22) qui comporte un film de polytétrafluoroéthylène poreux et est positionnée sur un côté en aval du flux d'air par rapport à la couche de pré-collecte pour collecter de la poussière qui passe à travers la couche de pré-collecte (20), une couche de recouvrement perméable à l'air (24) qui est positionnée dans la couche de surface la plus extérieure sur un côté en amont du flux d'air pour permettre à de la poussière dans le flux d'air de passer à travers celle-ci et supprimer une déformation de la surface du matériau de filtration (10) pour un filtre à air provoquée par une force de pressage en provenance d'un extérieur, et une couche de support perméable à l'air (26) qui est positionnée sur le côté en aval du flux d'air par rapport à la couche de collecte principale (22) pour supporter la couche de collecte principale (22), le procédé comprenant :

l'obtention d'un premier stratifié par stratification d'un élément qui devient une couche de support perméable à l'air (26) et d'un élément qui devient la couche de collecte principale (22) ;

l'obtention d'un deuxième stratifié par stratification d'un élément qui devient la couche de recouvrement perméable à l'air (24) et d'un élément qui devient la couche de pré-collecte (20) ; et

une stratification de telle manière que l'élément qui devient la couche de collecte principale (22) dans le premier stratifié et l'élément qui devient la couche de pré-collecte (20) dans le deuxième stratifié sont positionnées dans le côté intérieur de celle-ci,

**caractérisé en ce que**

la couche de recouvrement perméable à l'air (24) a une épaisseur de 0,3 mm ou moins et un diamètre de fibre moyen de 10 à 30 $\mu$m, et un poids par surface unitaire de 5 à 20 g/m$^2$,

dans lequel la couche de recouvrement perméable à l'air (24) est constituée d'un tissu non tissé filé-lié.

FIG.1A

FIG.1B

FIG.2

10

24
20
22
26

FIG.3A

12

24
20
22
26

FIG.3B

12

A          A

PRE-COLLECTION LAYER

PRINCIPAL COLLECTION LAYER

AIR-PERMEABLE SUPPORT LAYER

FIG.4

FIG.5A

FIG.5B

FIG.6

FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1750493 A1
- JP 2000300921 A
- JP 2002370009 A